# EUROPEAN PATENT APPLICATION

(11) **EP 3 229 198 A1**
(43) Date of publication of application: **11.10.2017**
(21) Application number: 16163984.4
(22) Date of filing: 06.04.2016
(51) Int. Cl.: G06Q 50/00, G06Q 30/00

(54) **DIGITAL INFORMATION SHARING PROCESS**

(71) Applicant: Awgy, 6927 Tellin (BE)
(72) Inventor: de Mûelenaere, Julien, 3090 Overijse (BE); de Mûelenaere, Emmanuel, 1150 Woluwe-Saint-Pierre (BE)
(74) Representative: Gevers Patents

(57) **Abstract**

The present invention relates to a digital information sharing process (1). A requester (41) indicates (101) on its device (40) that he wants to trigger the digital information sharing process (1). His device (40) transmits a corresponding request to a social networking system (10), possibly with digital content. The social networking system (10) starts (102) a counting and requests (103) digital content to a plurality of guest devices (50), receives (104) digital content from at least part of the plurality of guest devices (50), and sends (107) digital output information determined from at least part of the received digital content if at least one of the following conditions is satisfied: the counting reaches (105) a predetermined threshold, and digital content has been received (106) from a predetermined number of guest devices (50), preferably all guest devices (50), of the plurality of guest devices (50).

## Description

### Field of the invention

According to a first aspect, the present invention relates to a process for sharing digital information. According to a second aspect, the present invention relates to a social networking system for sharing digital information. According to a third aspect, the present invention relates to a computer program for sharing digital information.

### Background of the invention

Social network computer platforms can be used to share content with other people. However, in known social network computer platforms, a user cannot easily invite other people to share their own content. The known social network computer platforms encourage therefore selfish behaviors where everyone shares only content about himself, without real exchange of content.

### Summary of the invention

According to a first aspect, an object of the invention is to provide a digital information sharing process wherein several people easily share digital content.

According to this first aspect, the invention provides a digital information sharing process comprising the steps of:
1) starting a counting and requesting digital content to a plurality of guest devices,
2) receiving digital content from at least one guest device of the plurality of guest devices, if at least one guest device sends digital content after having received the request of step 1),
3) sending digital output information if at least one of the following conditions is satisfied:
   - the counting reaches a predetermined threshold, or
   - digital content has been received from a predetermined number of guest devices of the plurality of guest devices,
   the digital output information being determined from at least part of the digital content received at step 2) if digital content has been received at step 2) from at least one guest device of the plurality of guest devices.

A requester who triggers this digital information sharing process on his device readily triggers an automatic process wherein several guests are asked to share digital content. If a guest is willing to share digital content, this guest can easily do it. The process then automatically collects the received digital contents and uses them to determine digital output information. This makes possible a real exchange of digital content between the requester and the guests.

If a guest is not willing to share digital content or is not available to react to the request for digital content, the counting prevents his absence of reaction from blocking the digital information sharing process: digital output information is sent anyway when the counting reaches the threshold, even if a number of guest devices lower than the predetermined number of guest devices has not reacted.

In the present document, a "device" is preferably an electronic device.

In an embodiment of the invention, the digital information sharing process further comprises, before step 3), a step of receiving digital content from a requester device, which is a device that has triggered the digital information sharing process, and wherein the digital output information is determined from at least one of:
- at least part of the digital content received from the requester device, and
- if digital content has been received at step 2) from at least one guest device of the plurality of guest devices, at least part of the digital content received at step 2).

It is advantageous that the requester device provides also digital content that may be used, possibly with the digital content from the guest devices, to determine the digital output information.

In an embodiment of the invention, the counting comprises a timer and the predetermined threshold comprises an end of a predetermined time duration.

Like that, after the predetermined time duration, the digital output information is sent, even if some guests have not reacted.

In an embodiment of the invention, the counting comprises a count of actions taken on a requester device, which is a device that has triggered the digital information sharing process, and the predetermined threshold comprises a predetermined action count value.

Preferably, an action taken on the requester device is at least one of: click action, view action, share action, commenting action, promoting a post action, forward information action or liking action.

In an embodiment of the invention, the digital information sharing process comprises, before step 1), a step of receiving digital information about at least one of: the counting and the predetermined threshold.

A requester may provide, for example when he triggers the digital information sharing process on his device, some preferences about the counting and the predetermined threshold. For example, he wants the counting to be a timer and the predetermined threshold to be 24 hours.

In an embodiment of the invention, the digital information sharing process comprises, before step 1), a step of receiving digital information about the guest devices.

A requester may provide, for example when he triggers the digital information sharing process on his device, some preferences about the guest devices. For example, he wants the guests, which are corresponding to the guest devices, to be the people present in a given list of friends.

In an embodiment of the invention, the digital content is at least one of: a message, an image, a picture, a video, a tag, a sound, a text, location information, an emoticon, a hyperlink to a location on the Internet, sensor information, structured data or a combination thereof.

The digital information sharing process can be used to share any kind of digital information.

In an embodiment of the invention, at step 3), the digital output information is sent to at least one of: all the guest devices of the plurality of guest devices, part of the guest devices of the plurality of guest devices, the guest devices from which digital content was received at step 2), and a requester device, which is a device that has triggered the digital information sharing process.

The exchange of digital content is especially reciprocal if at least the requester device and the guest devices from which digital content was received at step 2) are sent the digital output information.

In an embodiment of the invention, step 3) comprises a step of combining at least part of the digital content received at step 2) to generate a combined digital content, and the digital output information comprises the combined digital content.

It is especially interesting that the digital information sharing process sends a combination of digital contents and not separated pieces of digital content because a combined piece of digital content is easier to handle than separated pieces of digital content. The digital information sharing process may further perform other actions on the received digital content before sending the result of these actions as digital output information.

Preferably, the predetermined number of guest devices is equal to the total number of guest devices that have been requested a digital content at step 1).

It can be interesting that the process stops either when every invited guest device has answered or when counting reaches the predetermined threshold.

In an embodiment of the invention, the digital information sharing process further comprises a step 2b), between step 2) and step 3) of:
if digital content has been received from only part of the guest devices of the plurality of guest devices, sending partial digital output information determined from at least part of the digital content received so far to at least one of: all the guest devices of the plurality of guest devices, part of the guest devices of the plurality of guest devices, the guest devices from which digital content has been received so far, and a requester device, which is a device that has triggered the digital information sharing process.

This makes possible for the requester and/or some guests to get an update on the digital content received so far. For example, if the counting is a timer of one month, it is interesting for the requester to receive already the digital content sent so far by the guest devices.

Preferably, step 2b) comprises combining at least part of the received digital content received so far to generate a combined partial digital content, and the partial digital output information comprises the combined partial digital content.

According to a second aspect, the invention provides a social networking system for sharing digital information comprising at least one processor and an associated storage medium containing a program executable by means of the at least one processor and comprising:
- first software code portions configured for starting a counting and requesting digital content to a plurality of guest devices;
- second software code portions configured for receiving (or reading) digital content from at least one guest device of the plurality of guest devices, if at least one guest device sends digital content after having received the request of digital content;
- third software code portions configured for sending digital output information if at least one of the following conditions is satisfied:
   - the counting reaches a predetermined threshold, or
   - digital content has been received from a predetermined number of guest devices of the plurality of guest devices,
   the digital output information being determined from at least part of the digital content received with the second software code portions if digital content has been received with the second software code portions from at least one guest device of the plurality of guest devices.

In an embodiment of the invention, the social networking system comprises at least one of: a server comprising means for digital information treatment and being configured for providing functionality for other devices and at least part of a requester device comprising means for digital information treatment.

According to a third aspect, the invention provides a computer program for sharing digital information comprising:
- first software code portions configured for starting a counting and requesting digital content to a plurality of guest devices;
- second software code portions configured for receiving (or reading) digital content from at least one guest device of the plurality of guest devices, if at least one guest device sends digital content after having received the request of digital content;
- third software code portions configured for sending digital output information if at least one of the following conditions is satisfied:
   - the counting reaches a predetermined threshold, or
   - digital content has been received from a predetermined number of guest devices of the plurality of guest devices,
   the digital output information being determined from at least part of the digital content received with the second software code portions if digital content has been received with the second software code portions from at least one guest device of the plurality of guest devices.

### Brief description of the figures

For a better understanding of the present invention, reference will now be made, by way of example, to the accompanying drawings in which:
- Figure 1 illustrates a configuration of electronic devices according to an embodiment of the invention, and
- Figure 2 shows a flowchart with a digital information sharing process according to an embodiment of the invention.

### Description of some possible embodiments of the invention

The present invention will be described with respect to particular embodiments and with reference to certain drawings but the invention is not limited thereto. The drawings described are only schematic and are nonlimiting. In the drawings, the size of some of the elements may be exaggerated and not drawn on scale for illustrative purposes.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Furthermore, the various embodiments, although referred to as "preferred" are to be construed as exemplary manners in which the invention may be implemented rather than as limiting the scope of the invention.

The term "comprising", used in the claims, should not be interpreted as being restricted to the elements or steps listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising A and B" should not be limited to devices consisting only of components A and B, rather with respect to the present invention, the only enumerated components of the device are A and B, and further the claim should be interpreted as including equivalents of those components.

On the figures, identical or analogous elements may be referred by a same number.

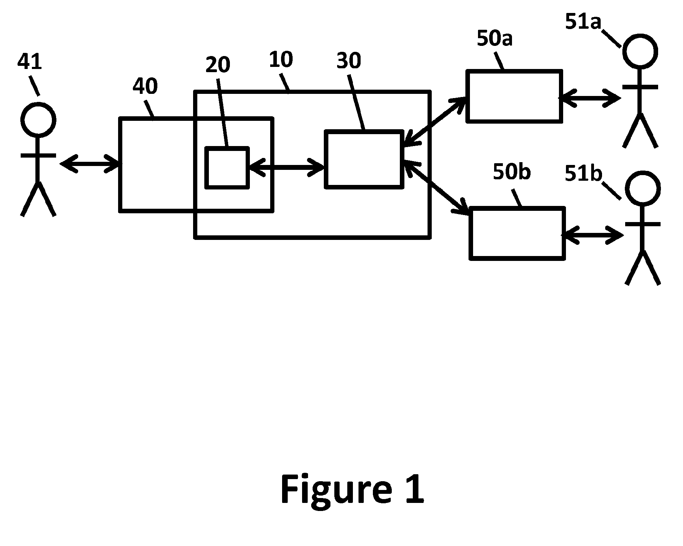

Figure 1 illustrates a configuration of electronic devices according to an embodiment of the invention. A requester 41 uses a requester device 40 which runs a software 20. The requester device 40 is connectable to a server 30. A social networking system 10 preferably comprises the server 30 and at least part of the requester device 40, for example a part of the requester device 40 running the software 20. The server 30 is connectable to a plurality of guest devices 50. Each guest device 50 is used by a guest 51. Even if figure 1 shows only two guest devices 50a, 50b, it will be readily understood that there can be many more guest devices 50.

The requester device 40 can for example be a desktop, a laptop, a mobile phone or a tablet.

The server 30 can for example be a computer, a plurality of computers, can for example be in the cloud. The server 30 is configured for providing functionality for other devices.

The software 20 running on the requester device 40 can for example be an application dedicated to the social networking system 10 and the server 30 can run a software dedicated to the social networking system 10.

The guest device 50 can for example be a desktop, a laptop, a mobile phone or a tablet. The guest device 50 preferably runs a software dedicated to the social networking system 10, for example the same application as the application dedicated to the social networking system 10 run on the requester device 40.

The connection between the requester device 40 and the server 30 can be an Internet connection. It can be permanent or temporary. It can be wired and/or wireless.

The connection between the guest device 50 and the server 30 can be an Internet connection. It can be permanent or temporary. It can be wired and/or wireless.

The number of guest devices 50 is preferably comprised between 2 and 100, more preferably between 2 and 20, even more preferably between 2 and 10.

According to another embodiment of the invention, not shown, the social networking system 10 does not comprise a server 30 and does comprise at least part of the requester device 40, preferably the part of the requester device running the software 20. In this embodiment, the requester device 40 is connected to the guest devices 50, for example through a server which is not part of the social networking system 10, through the Internet, through Wi-Fi, through blue-tooth or through any wired and/or wireless connection means.

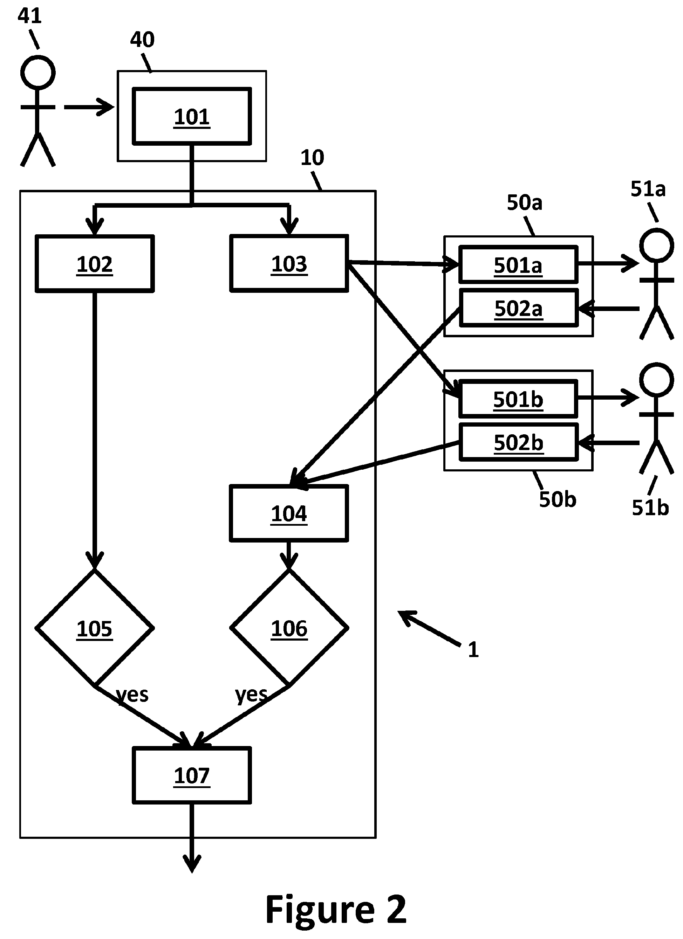

Figure 2 shows a flowchart with a digital information sharing process 1 according to an embodiment of the invention.

The requester 41 indicates 101 on its device 40 that he wants to trigger the digital information sharing process 1, for example by starting the software 20 (figure 1) or starting a new instance on the software 20. The requester device 40 sends a request to the social networking system 10 to trigger the digital information sharing process 1. When this request is received by the social networking system 10, the social networking system 10 starts 102 a counting and requests 103 digital content to a plurality of guest devices 50a, 50b by sending a request for digital content to each of them. Each guest device 50 receives 501 the request for digital content. The actions of starting 102 the counting and requesting 103 digital content to a plurality of guest devices 50 can for example be simultaneous or spaced by a time interval, for instance one minute.

In an embodiment of the invention, the requester device 40 sends digital content to the social networking system 10, for example when the requester device 40 sends the request to the social networking system 10 to trigger the digital information sharing process 1.

In an embodiment of the invention, each guest device 50 informs its user, the guest 51, of the request for digital content. Each guest 51 can react by indicating 502 to its device 50 the digital content he wants to send to the social networking system 10. A guest 51 can also react by indicating that he does not want to send digital content to the social networking system 10. A guest 51 can also not react.

Every guest device 50 wherein the guest 51 has provided an indication has been provided 502 that a digital content should be sent to the social networking system 10 sends the corresponding digital content to the social networking system 10. The social networking system 10 receives 104 the digital content(s), if at least one guest device 50 sends digital content. The social networking system 10 may also receive digital content from the requester device 40.

In an embodiment of the invention, the social networking system 10 checks 106 if digital content has been received from a predetermined number of guest devices 50 to which request for digital content had been sent 103 every time the social networking system 10 receives 104 digital content from a guest device 50. In an embodiment of the invention, the social networking system 10 checks 106 if digital content has been received from all the guest devices 50 to which request for digital content had been sent 103 every time the social networking system 10 receives 104 digital content from a guest device 50.

When the counting reaches 105 a predetermined threshold or digital content has been received 106 from a predetermined number of guest devices 50 that were sent 103 request for digital content, the social networking system 10 sends 107 digital output information determined based on at least part of the digital content received from at least one of: the requester device 40 and at least one guest device 50 of the plurality of guest devices 50. Preferably, the digital output information is determined based on at least part of the digital content received from each of the guest devices 50 and requester device 40 that has sent digital content.

In an embodiment of the invention, the counting comprises a timer and the predetermined threshold comprises an end of a predetermined time duration. In such a case, even if all the guest devices 50 have not send digital content after the predetermined time duration, the social networking system 10 sends 107 the digital output information.

In an embodiment of the invention, the social networking system 10 sends a reminder to the guest devices 50 at a predetermined time before the end of the predetermined time duration. For example, if the predetermined time is thirty minute, the social networking system 10 sends a reminder to the guest devices 50 ten minutes before the end of the thirty minutes.

In an embodiment of the invention, the counting comprises a count of actions on the requester device 40 and the predetermined threshold comprises a predetermined action count value. For example, the predetermined threshold can be that 100 actions have been performed on the requester device 40. An action taken on the requester device can be at least one of: a click action, a view action, a share action, a commenting action, a promoting a post action, a forward information action or a liking action.

In an embodiment of the invention, the counting comprises a combination of a count of actions and a timer. The predetermined threshold comprises an end of a predetermined time duration and/or a predetermined action count value.

In an embodiment of the invention, when the requester 41 indicates 101 on its device 40 that he wants to trigger the digital information sharing process 1, he indicates the guests 51 he wants to invite for the digital information sharing process 1. This can be done by a selection of guests 51 in a list of guests available on the software 20 running on the requester device 40, a selection of a predefined list of guests 51, or a selection of guests 51 taking all the people according to a given privacy setting like friends, acquaintances, only friends of friends, specific list, specific group or public. This indication of the guests 51, which comprises digital information about the guest devices 50, is sent from the requester device 40 to the social networking system 10, for example together with the request to trigger the digital information sharing process 1.

In an embodiment of the invention, if the requester 41 does not indicate guests 51 when he triggers the digital information sharing process 1 on its device 50, the social networking system 10 may use a default list of guests 51.

In an embodiment of the invention, when the requester 41 indicates 101 on its device 40 that he wants to trigger the digital information sharing process 1, he indicates that he wants the counting to be a timer and/or the predetermined time duration to be a given value, for example 30 minutes. This indication of the counting, which comprises digital information about the counting and/or the predetermined threshold, is sent from the requester device 40 to the social networking system 10, for example together with the request to trigger the digital information sharing process 1.

In an embodiment of the invention, when the requester 41 indicates 101 on its device 40 that he wants to trigger the digital information sharing process 1, he indicates that he wants the counting to be a count of actions taken on a requester device 40 and/or the predetermined action count value to be a given value, for example 50 actions. This indication of the counting, which comprises digital information about the counting and/or the predetermined threshold, is sent from the requester device 40 to the social networking system 10, for example together with the request to trigger the digital information sharing process 1.

In an embodiment of the invention, if the requester 41 does not provide information about the counting and/or the predetermined threshold when he triggers the digital information sharing process 1 on its device 40, the social networking system 10 may use default information about the counting and/or the predetermined threshold.

Each request for digital content sent to the guest device 50 can for example be an email, a text message like an SMS, or a push notification (Apple's APNS, Google's GCM, Windows WNs). An audio and/or visual symbol can be associated with the requester 41 in the request for digital content to the guest device 50.

In an embodiment of the invention, the digital content is at least one of: a message, an image, a picture, a video, a tag, a sound, a text, location information, a feeling in the form of an emoticon, a hyperlink to a location on the Internet, sensor information, structured data or a combination thereof. The sensor information can be information obtained from sensor(s) on the guest device 50, like a number of traveled kilometers measured with the guest device 50. For example, the requests for digital content to the guest devices 50 can indicate to the guests 51 that the digital content should include a picture or a selfie and the digital content can be a picture or selfie taken with the guest device 50.

In an embodiment of the invention, a guest 51 can have in advance indicated that, at the reception of a request for digital content, its device 50 should react in a specific way, for example, by sending automatically a given digital content to the social networking system 10. This given digital content can be already present in the guest device 50 when it receives the request for digital content, like a picture stored in a memory of the guest device 50, or it can be automatically generated at the reception of the request for digital content, like a picture taken by the guest device 50 at the reception of the request for digital content.

In an embodiment of the invention, the predetermined number of guest devices 50 is the total number of guest devices 50 that have been sent 103 a request for digital content. In an embodiment of the invention, the predetermined number of guest devices 50 is the total number of guest devices 50 that have been sent 103 a request for digital content minus another predetermined number of guest devices 50. In an embodiment of the invention, the predetermined number of guest devices 50 is a rounded percentage of the total number of guest devices 50 that have been sent 103 a request for digital content.

In an embodiment of the invention, the social networking system 10 sends 107 digital output information determined from at least part of the received digital content to at least one of: all the guest devices 50 of the plurality of guest devices 50, part of the guest devices 50 of the plurality of guest devices 50, the guest devices 50 from which digital content was received at step 104, and the requester device 40. In a preferred embodiment, the digital output information is sent to the requester device 50 and all the guest devices 50 to which request for digital content had been sent 103.

In an embodiment of the invention, the guest devices 50 of the plurality of guest devices 50 that are sent the digital output information are determined from the digital content sent by the guest devices. For example, a question can be sent to the guest devices 50 together with the request for digital content and only the guest devices 50 that have provided an answer to the question that fulfills a given criterion are sent the digital output information. In an embodiment of the invention, the guest devices 50 of the plurality of guest devices 50 that are sent the digital output information are determined randomly.

In an embodiment of the invention, the requester device 40 provides digital content to the social networking system 10, for example when it triggers the digital information sharing process 1, and the digital output information comprises at least part of this requester digital content.

In an embodiment of the invention, the digital output information includes at least part of the received digital content.

In an embodiment of the invention, the social networking system 10 combines at least part of the digital contents received 104 from the guest devices 50 that have sent digital content, and possible the digital content received from the requester device 40, to generate a combined digital content included in the digital output information to be sent 107.

For example, if the digital contents are pictures, the social networking system 10 combines them and possibly crops them to create a single picture comprising the received pictures. This combination step may involve an algorithm for picture layout.

For example, if the digital contents are pictures, the social networking system 10 can insert them in a predefined movie.

For example, if the digital contents comprise audio information, the social networking system 10 combines them, and possibly performs some treatment on them, to create a single or a plurality of audio files.

In an embodiment of the invention, if digital content has been received 104 from only some of the guest devices 50, the social networking system 10 sends partial digital output information to at least one of: all the guest devices 50 of the plurality of guest devices 50, some of the guest devices 50, the guest devices 50 from which digital content has been received 104 so far, and the requester device 40. The partial digital output information comprises at least part of the digital content received so far. For example, the social networking system 10 may combine at least part of the received digital content received so far to generate a combined partial digital content, and the partial digital output information comprises the combined partial digital content. In a later stage, when the counting reaches 105 a predetermined threshold or digital content has been received 106 from a predetermined number of guest devices 50 to which request for digital content had been sent 103, the social networking system 10 send 107 the digital output information.

In an embodiment of the invention, the social networking system 10 checks every time it receives 104 digital content, whether the counting has reached 105 a predetermined threshold or whether digital content has been received 106 from a predetermined number of guest devices 50 to which request for digital content had been sent 103. If at least one of these two conditions is fulfilled, it sends 107 the digital output information determined from at least part of the received digital content.

In an embodiment of the invention, if the digital output information has already been sent 107 once, for example because the counting had reached 105 the predetermined threshold, the social networking system 10 ignores any additional digital content received from a guest device 50.

In an embodiment of the invention, the social networking system 10 collects information about the indications provided by the requester 1 on the guests 51 he wants to invite for the digital information sharing process 1 and/or on the counting. This information can be analyzed so that the social networking system 10 may provide better default values or ranges of values for the counting and/or the guests in the future. For example, if the collected information indicates that many requesters 40 select a maximum interaction count allowed, the social networking system 10 may make the maximum interaction count number higher in the future. The information is collected, stored and used in accordance with the local laws and user's privacy settings.

In other words, the invention relates to a digital information sharing process 1. A requester 41 indicates 101 on its device 40 that he wants to trigger the digital information sharing process 1. His device 40 transmits a corresponding request to a social networking system 10, possibly with digital content. The social networking system 10 starts 102 a counting and requests 103 digital content to a plurality of guest devices 50, receives 104 digital content from at least part of the plurality of guest devices 50, and sends 107 digital output information determined from at least part of the received digital content if at least one of the following conditions is satisfied: the counting reaches 105 a predetermined threshold, and digital content has been received 106 from a predetermined number of guest devices 50, preferably all guest devices 50, of the plurality of guest devices 50.

Although the present invention has been described above with respect to particular embodiments, it will readily be appreciated that other embodiments are also possible.

## Claims

1. Digital information sharing process (1) comprising the steps of:
1) starting (102) a counting and requesting (103) digital content to a plurality of guest devices (50),
2) receiving (104) digital content from at least one guest device (50) of the plurality of guest devices (50), if at least one guest device (50) sends digital content after having received the request of step 1),
3) sending (107) digital output information if at least one of the following conditions is satisfied:
• the counting reaches (105) a predetermined threshold, or
• digital content has been received (106) from a predetermined number of guest devices (50) of the plurality of guest devices (50),
the digital output information being determined from at least part of the digital content received at step 2) if digital content has been received at step 2) from at least one guest device (50) of the plurality of guest devices (50).

2. Digital information sharing process (1) according to claim 1, further comprising, before step 3), a step of receiving digital content from a requester device (40), which is a device that has triggered the digital information sharing process (1), and wherein the digital output information is determined from at least one of:
• at least part of the digital content received from the requester device (40), and
• if digital content has been received at step 2) from at least one guest device (50) of the plurality of guest devices (50), at least part of the digital content received at step 2).

3. Digital information sharing process (1) according to any of the preceding claims, wherein the counting comprises a timer and the predetermined threshold comprises an end of a predetermined time duration.

4. Digital information sharing process (1) according to any of the preceding claims, wherein the counting comprises a count of actions taken on a requester device (40), which is a device that has triggered the digital information sharing process (1), and the predetermined threshold comprises a predetermined action count value.

5. Digital information sharing process (1) according to the preceding claim, wherein an action taken on the requester device (40) is at least one of: click action, view action, share action, commenting action, promoting a post action, forward information action or liking action.

6. Digital information sharing process (1) according to any of the preceding claims, further comprising, before step 1), a step of receiving digital information about at least one of: the counting and the predetermined threshold.

7. Digital information sharing process (1) according to any of the preceding claims, further comprising, before step 1), a step of receiving digital information about the guest devices (50).

8. Digital information sharing process (1) according to any of the preceding claims, wherein the digital content is at least one of: a message, an image, a picture, a video, a tag, a sound, a text, location information, an emoticon, a hyperlink to a location on the Internet, sensor information, structured data or a combination thereof.

9. Digital information sharing process (1) according to any of the preceding claims, wherein at step 3), the digital output information is sent to at least one of: all the guest devices (50) of the plurality of guest devices (50), part of the guest devices (50) of the plurality of guest devices (50), the guest devices (50) from which digital content was received at step 2), and a requester device (40), which is a device that has triggered the digital information sharing process (1).

10. Digital information sharing process (1) according to any of the preceding claims, wherein step 3) comprises a step of combining at least part of the digital content received at step 2) to generate a combined digital content, and the digital output information comprises the combined digital content.

11. Digital information sharing process (1) according to any the preceding claims, wherein the predetermined number of guest devices (50) is equal to the total number of guest devices (50) that have been requested (103) a digital content at step 1).

12. Digital information sharing process (1) according to any the preceding claims, further comprising a step 2b), between step 2) and step 3) of:
if digital content has been received from only part of the guest devices (50) of the plurality of guest devices (50), sending partial digital output information determined from at least part of the digital content received so far to at least one of: all the guest devices (50) of the plurality of guest devices (50), part of the guest devices (50) of the plurality of guest devices (50), the guest devices (50) from which digital content has been received so far, and a requester device (40), which is a device that has triggered the digital information sharing process (1).

13. Digital information sharing process (1) according to the preceding claim, wherein step 2b) comprises combining at least part of the received digital content received so far to generate a combined partial digital content, and the partial digital output information comprises the combined partial digital content.

14. Social networking system (10) for sharing digital information comprising at least one processor and an associated storage medium containing a program executable by means of the at least one processor and comprising:
• first software code portions configured for starting (102) a counting and requesting (103) digital content to a plurality of guest devices (50);
• second software code portions configured for receiving (104) digital content from at least one guest device (50) of the plurality of guest devices (50), if at least one guest device (50) sends digital content after having received the request of digital content;
• third software code portions configured for sending (107) digital output information if at least one of the following conditions is satisfied:
• the counting reaches (105) a predetermined threshold, or
• digital content has been received (106) from a predetermined number of guest devices (50) of the plurality of guest devices (50),
the digital output information being determined from at least part of the digital content received with the second software code portions if digital content has been received with the second software code portions from at least one guest device (50) of the plurality of guest devices (50).

15. Social networking system (10) according to the preceding claim, comprising at least one of: a server (30) comprising means for digital information treatment and being configured for providing functionality for other devices and at least part of a requester device (40) comprising means for digital information treatment.

16. Computer program for sharing digital information comprising:
• first software code portions configured for starting (102) a counting and requesting (103) digital content to a plurality of guest devices (50);
• second software code portions configured for receiving (104) digital content from at least one guest device (50) of the plurality of guest devices (50), if at least one guest device (50) sends digital content after having received the request of digital content;
• third software code portions configured for sending (107) digital output information if at least one of the following conditions is satisfied:
• the counting reaches (105) a predetermined threshold, or
• digital content has been received (106) from a predetermined number of guest devices (50) of the plurality of guest devices (50),
the digital output information being determined from at least part of the digital content received with the second software code portions if digital content has been received with the second software code portions from at least one guest device (50) of the plurality of guest devices (50).
